# EUROPEAN PATENT APPLICATION

(11) **EP 2 584 498 A1**
(43) Date of publication of application: **24.04.2013**
(21) Application number: 13151861.5
(22) Date of filing: 08.11.2010
(51) Int. Cl.: G06K 13/08, G06K 7/08, G06K 7/00

(54) **Card processing apparatus**

(30) Priority: 09.11.2009 JP 2009256252; 26.11.2009 JP 2009268291
(62) Divisional of application: 10190341.7
(71) Applicant: Hitachi-Omron Terminal Solutions, Corp., Shinagawa-ku Tokyo 141-0032 (JP)
(72) Inventor: Ishiguro, Jun, Tokyo, 100-8220 (JP); Tadamasa, Akihiro, Tokyo, 100-8220 (JP)
(74) Representative: MERH-IP Matias Erny Reichl Hoffmann

(57) **Abstract**

A card processing apparatus (100) is provided with a card insertion detecting unit (7) arranged in a magnetic head (70). The card insertion detecting unit (7) includes a reading unit (71) for reading magnetic data recorded on a magnetic card (160), an output unit (74) for outputting a signal read by the reading unit (71), and an output control unit (73) for controlling whether or not to output the signal read by the reading unit (71) from the output unit (74). When the magnetic card (160) is inserted, since only a reproduction signal for the preamble part of the magnetic data is output from the output unit (74), a body part of the magnetic data is prevented from being illegally acquired.

## Description

### Technical Field

The present invention relates to a card processing apparatus provided with a magnetic data reading device that reads magnetic data recorded on a magnetic card.

### Background Art

There is conventionally known a card processing apparatus including a slot to which a magnetic card is inserted, a card insertion detecting unit (magnetic data reading device) for detecting the insertion of the magnetic card to the slot, a shutter member for opening and closing the slot based on the detection result of the card insertion detecting unit, and a read/write head for performing processing on the magnetic card inserted from the slot.

The conventional card processing apparatus is configured to prevent magnetic information from being illegally acquired by an illegal acquiring device when such device is attached to the front side of the slot. The illegal acquiring device includes a magnetic head for reading magnetic data.

Specifically, in a card processing apparatus of Patent Literature 1 listed below, a photo-sensor for detecting a foreign matter is arranged in the vicinity of the slot. When an illegal acquiring device is detected by the photo-sensor, the card processing apparatus stops the retrieval of a magnetic card and issues an alarm to prevent magnetic information from being illegally acquired.

In a card processing apparatus of Patent Literature 2 listed below, a magnetic field generator for generating an obstructive magnetic field is arranged at the front side of the slot. The card processing apparatus makes the reading of magnetic data by an illegal acquiring device difficult with the magnetic field generator, whereby prevents magnetic information from being illegally acquired.

A card processing apparatus of Patent Literature 3 listed below makes the reading of magnetic data by an illegal acquiring device difficult, by intermittently transporting a magnetic card, thereby preventing magnetic information from being illegally acquired, based on a fact that a magnetic head needs to be continuously moved with respect to a magnetic stripe of the magnetic card in order to read the magnetic data of the magnetic card.

### Citation List

### Patent Literature

Patent Literature 1: Japanese Patent No. 3850595
Patent Literature 2: Japanese Patent No. 3936496
Patent Literature 3: Japanese Patent No. 3801976

### Summary of Invention

### Technical Problems

However, in the conventional card processing apparatus disclosed in Patent Literature 1 and Patent Literature 2, if there is performed an illegal act of directly connecting the lead wire to an output line of the card insertion detecting unit for detecting the insertion of a magnetic card, the magnetic information read by the card insertion detecting unit may be illegally acquired through a lead wire.

In the conventional card processing apparatus disclosed in Patent Literature 3, if there is performed an illegal act of directly connecting a lead wire to an output line of the card insertion detecting unit for detecting the insertion of a magnetic card, the possibility that the magnetic information will be restored from the magnetic data read by the card insertion detecting unit through the lead wire may not be zero, and thus the magnetic information may be illegally acquired.

In order to solve the above problems, it is an object of the present invention to provide a card processing apparatus capable of preventing the magnetic information from being illegally acquired when there is performed such an illegal act of directly connecting the lead wire to the output line of a magnetic data reading device.

### Solution to Problems

A card processing apparatus of the present invention includes a magnetic data reading device provided with a reading unit for reading magnetic data recorded on a magnetic card and an output unit for outputting a signal read by the reading unit. The magnetic data reading device further includes a switching portion for switching whether or not to output the signal read by the reading unit from the output unit.

According to such a configuration, data to be output from the output unit is only a preamble part or a postamble part of the magnetic data and a body part of the magnetic data is not output even if there is performed such an illegal act of directly connecting the lead wire to the magnetic data reading device. Hence, the magnetic information can be prevented from being illegally acquired.

In the above-described card processing apparatus, the magnetic data reading device may further include a measuring portion for measuring a time length from the start of reading the magnetic data by the reading unit, and the switching portion may switch so as not to output a signal from the output unit when the time length measured by the measuring portion elapses a predetermined time length.

In the above-described card processing apparatus, the magnetic data reading device may further include an input unit to which a control signal is input, and the switching portion may switch whether or not to output the signal read by the reading unit from the output unit based on the control signal input to the input unit.

The above-described card processing apparatus provided with the input unit may further include a slot to which a magnetic card is inserted, a shutter member for opening and closing the slot, and a control unit for controlling the movement of the shutter member, where the magnetic data reading device may be arranged at the slot and the control unit may output a control signal to be input to the input unit.

In such a case, the reading unit may read the magnetic data recorded on the magnetic card when the magnetic card is inserted to the slot, the output unit may output the signal read by the reading unit to the control unit, and the control unit may move the shutter member so as to open the slot and output the control signal for controlling the switching portion so as to stop the signal output from the output unit when the signal is input thereto from the output unit.

The card processing apparatus provided with the input unit may further include a slot to which the magnetic card is inserted, a shutter member for opening and closing the slot, and a shutter position detecting unit for detecting the position of the shutter member, where the magnetic data reading device may be arranged at the slot, and the shutter position detecting unit may output a control signal that changes according to the position of the shutter member to the input unit.

A data reading device may include a reading unit for reading magnetic data recorded on a magnetic card, and an output unit for outputting a signal when the magnetic data is read by the reading unit. The output unit outputs a signal having a state where the restoration of magnetic information recorded on the magnetic card is impossible when the magnetic data is read by the reading unit. The state where the restoration is impossible includes a state in which the restoration is possible in theory but is very difficult in reality, thereby the restoration being substantially impossible.

According to such a configuration, even if the data is illegally acquired through a lead wire from the output unit when the lead wire is directly connected, magnetic information (a content of magnetic data) cannot be restored from the acquired data. Hence, the magnetic information can be prevented from being illegally acquired.

The above-described data reading device may further include a conversion portion for irreversibly converting the magnetic data read by the reading unit, where the output unit may output the data irreversibly converted by the conversion portion. According to this configuration, such data impossible to be restored can be easily created from the magnetic data read by the reading unit.

In the data reading device including the conversion portion, the conversion portion may irreversibly convert the magnetic data read by the reading unit in accordance with the Hash function.

In the data reading device including the conversion portion, the conversion portion may perform an irreversible conversion by extracting predetermined data from the magnetic data read by the reading unit.

In the data reading device, the reading unit may be arranged to incline with respect to a recording direction of the magnetic data recorded on the magnetic card, and the data of a plurality of units may be simultaneously read when reading the magnetic data recorded on the magnetic card. According to such a configuration, a signal having a state of being impossible to be restored to the magnetic information recorded on the magnetic card is read. Hence, the signal in a state where the restoration is impossible can be easily output.

In the data reading device, the reading unit may have a gap formed to incline with respect to the recording direction of the magnetic data recorded on the magnetic card, and the data of a plurality of units may be simultaneously read when reading the magnetic data recorded on the magnetic card. According to such a configuration, a signal having a state of being impossible to be restored to the magnetic information recorded on the magnetic card is read. Hence, the signal in a state where the restoration is impossible can be easily output.

In such a case, the card processing apparatus may further include a slot to which the magnetic card is inserted, a shutter member for opening and closing the slot, and a control unit for controlling the movement of the shutter member. The reading unit may be arranged at the slot and read the magnetic data recorded on the magnetic card when the magnetic card is inserted to the slot. The output unit may output a signal having a state where the restoration is impossible to the control unit when the magnetic data is read by the reading unit. The control unit may move the shutter member to open the slot when the signal having the state where the restoration is impossible is input thereto. According to such a configuration, the insertion of the magnetic card can be detected to open the slot while preventing the magnetic information from being illegally acquired.

The data reading device includes a reading unit for reading magnetic data recorded on a magnetic card, an output unit for outputting a signal when the magnetic data is read by the reading unit, a storage unit for storing data obtained by irreversibly converting the magnetic data, a conversion portion for irreversibly converting the magnetic data read by the reading unit, and a comparing unit for comparing the data irreversibly converted by the conversion portion and the data stored in the storage unit, where the output unit outputs a comparison result provided by the comparing unit.

The card processing apparatus is provided with a data reading device including the above-described conversion portion, a storage unit for storing the data obtained by irreversibly converting the magnetic data, and a comparing unit for comparing the data output from the output unit and the data stored in the storage unit.

### Advantageous Effects of Invention

According to the present invention, there can be provided a data reading device capable of preventing the magnetic information from being illegally acquired when there is performed an illegal act of directly connecting a lead wire to an output line of a magnetic data reading device, as well as a card processing apparatus equipped with such data reading device.

### Brief Description of Drawings

Fig. 1 is a block diagram showing a configuration of a card processing apparatus according to a first embodiment of the present invention and an ATM;
Fig. 2 is a side view showing an outline of the card processing apparatus of Fig. 1;
Fig. 3 is a view describing a card insertion detecting unit in the card processing apparatus of Fig. 2;
Fig. 4 is a waveform chart describing a reproduction signal and an output signal in the card insertion detecting unit of Fig. 3;
Fig. 5 is a block diagram showing a configuration of the card processing apparatus of Fig. 2;
Fig. 6 is a flowchart describing the operations of the card processing apparatus according to the first embodiment;
Fig. 7 is a side view describing the operations of the card processing apparatus according to the first embodiment;
Fig. 8 is a side view describing the operations of the card processing apparatus according to the first embodiment;
Fig. 9 is a side view describing the operations of the card processing apparatus according to the first embodiment;
Fig. 10 is a block diagram showing a configuration of a card processing apparatus according to a second embodiment of the present invention;
Fig. 11 is a view describing a card insertion detecting unit in the card processing apparatus of Fig. 10;
Fig. 12 is a flowchart describing the operations of the card processing apparatus according to the second embodiment;
Fig. 13 is a waveform chart describing a reproduction signal and an output signal in the card insertion detecting unit of Fig. 11;
Fig. 14 is a side view describing the operations of the card processing apparatus according to the second embodiment;
Fig. 15 is a side view describing the operations of the card processing apparatus according to the second embodiment;
Fig. 16 is a side view describing the operations of the card processing apparatus according to the second embodiment;
Fig. 17 is a block diagram showing a configuration of a card processing apparatus according to a third embodiment of the present invention;
Fig. 18 is a view describing a card insertion detecting unit in the card processing apparatus of Fig. 17;
Fig. 19 is a flowchart describing the operations of the card processing apparatus according to the third embodiment;
Fig. 20 is a waveform chart describing a reproduction signal and an output signal in the card insertion detecting unit of Fig. 18;
Fig. 21 is a side view describing the operations of the card processing apparatus according to the third embodiment;
Fig. 22 is a side view describing the operations of the card processing apparatus according to the third embodiment;
Fig. 23 is a side view describing the operations of the card processing apparatus according to the third embodiment;
Fig. 24 is a block diagram showing a configuration of a card processing apparatus according to a fourth embodiment of the present invention and an ATM;
Fig. 25 is a side view showing an outline of the card processing apparatus of Fig. 24;
Fig. 26 is a view describing a card insertion detecting unit in the card processing apparatus of Fig. 25;
Fig. 27 is a view describing a positional relationship between a reading unit in the card insertion detecting unit of Fig. 26 and a magnetic stripe of an inserted magnetic card;
Fig. 28 is a waveform chart describing a reproduction signal of a magnetic head in the card insertion detecting unit of Fig. 26;
Fig. 29 is a block diagram showing a configuration of the card processing apparatus of Fig. 25;
Fig. 30 is a flowchart describing the operations of the card processing apparatus according to the fourth embodiment;
Fig. 31 is a side view describing the operations of the card processing apparatus according to the fourth embodiment;
Fig. 32 is a side view describing the operations of the card processing apparatus according to the fourth embodiment;
Fig. 33 is a side view describing the operations of the card processing apparatus according to the fourth embodiment;
Fig. 34 is a block diagram showing a configuration of a card processing apparatus according to a fifth embodiment of the present invention;
Fig. 35 is a view describing a card insertion detecting unit in the card processing apparatus of Fig. 34;
Fig. 36 is a view describing a positional relationship between a reading unit in the card insertion detecting unit of Fig. 35 and a magnetic stripe of an inserted magnetic card;
Fig. 37 is a waveform chart describing a reproduction signal of a magnetic head in the card insertion detecting unit of Fig. 35;
Fig. 38 is a block diagram showing a configuration of a card processing apparatus according to a sixth embodiment of the present invention and a card gate system;
Fig. 39 is a view describing a magnetic data reading unit in the card processing apparatus of Fig. 38;
Fig. 40 is a view describing a positional relationship between a reading unit according to a variant of the fifth embodiment and a magnetic stripe of an inserted magnetic card; and
Fig. 41 is a view describing a magnetic data reading unit according to a variant of the sixth embodiment.

### Description of Embodiments

Hereinafter, first to sixth embodiments of the present invention will be described with reference to the drawings.

### <First Embodiment>

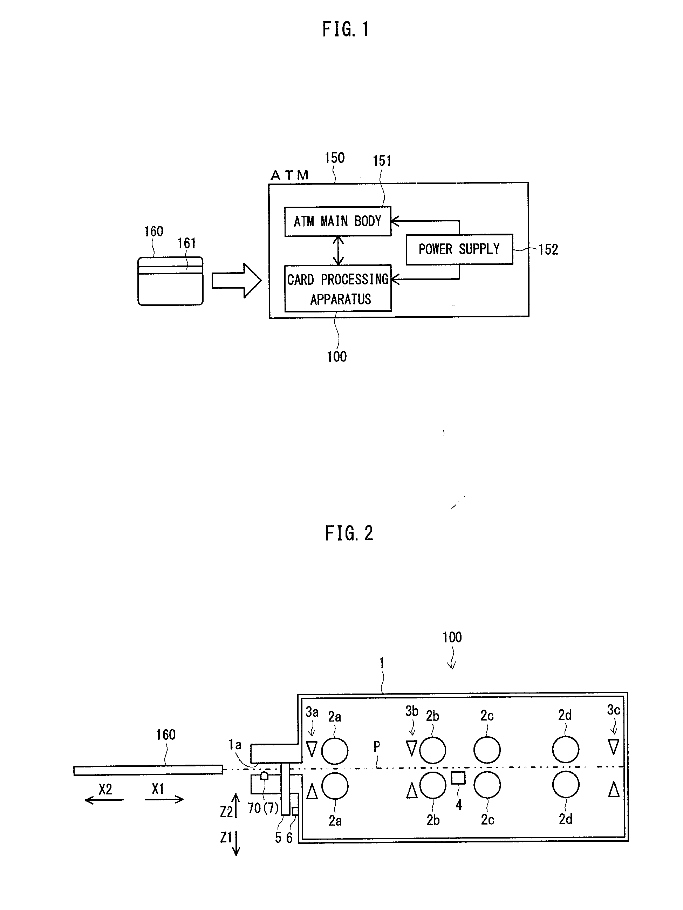

Referring to Figs. 1 to 5, configurations of a card processing apparatus 100 according to the first embodiment of the present invention and an ATM (Automated Teller Machine) 150 will be described.

As shown in Fig. 1, the ATM 150 has an ATM main body 151, a power supply 152, and the card processing apparatus 100. The ATM 150 is placed in a financial institution or the like so that a user makes a transaction such as withdrawal of cash.

The card processing apparatus 100 according to the first embodiment is mounted in the ATM 150. Electric power is supplied to the card processing apparatus 100 from the power supply 152. The card processing apparatus 100 performs a predetermined process on a magnetic stripe 161 of a magnetic card 160 inserted by the user.

Specifically, the card processing apparatus 100 reads data recorded on the magnetic stripe 161 of the magnetic card 160 and transmits the read data to the ATM main body 151. The card processing apparatus 100 also receives data transmitted from the ATM main body 151 and writes the received data on the magnetic stripe 161 of the magnetic card 160. On the magnetic stripe 161, the magnetic data is recorded in accordance with, for example, the F2F (Two Frequency Coherent Phase Encoding) system, in the order of a preamble part, a body part, and a postamble part.

As shown in Fig. 2, the card processing apparatus 100 includes a housing 1, conveyance rollers 2a to 2d, card position detecting units 3a to 3c, a read/write head 4, a shutter member 5, a shutter position detecting unit 6 and a card insertion detecting unit 7. The card insertion detecting unit 7 is an example of a "magnetic data reading device" in the present invention.

The housing 1 has, at its end on an arrow X2 side, a slot 1a into which the magnetic card 160 is inserted. Pairs of upper and lower conveyance rollers 2a to 2d are provided so that they sandwich a conveyance path P. The conveyance rollers 2a to 2d transport the magnetic card 160 in an insertion direction (the direction of an arrow X1) and an ejection direction (the direction of the arrow X2).

The card position detecting units 3a to 3c are, for example, photo-interrupters, each of which detects a position of the magnetic card 160 on a conveyance path P. The read/write head 4 reads and writes data from/on the inserted magnetic card 160.

The shutter member 5 is arranged to be movable in an opening direction (the direction of an arrow Z1) and a closing direction (the direction of an arrow Z2) to open and close the slot 1a. The shutter position detecting unit 6 is, for example, a microswitch, and detects the movement of the shutter member 5 to the closing position.

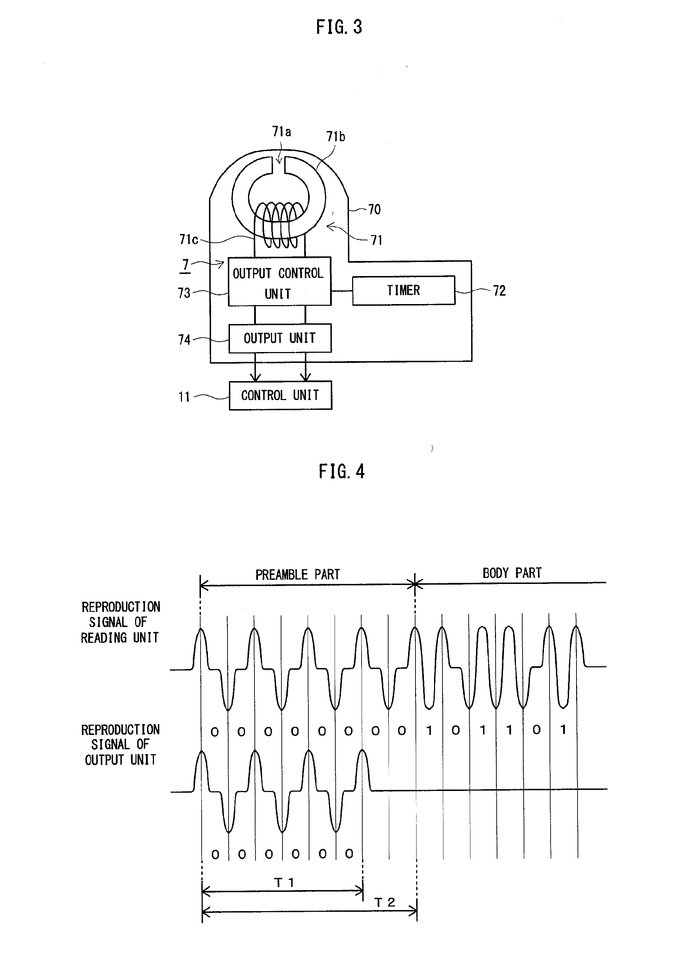

As shown in Fig. 3, the card insertion detecting unit 7 is arranged inside the magnetic head 70. The magnetic head 70 is arranged to be movable in the direction of the arrow Z1 and in the direction of the arrow Z2 (see Fig. 2). Specifically, the magnetic head 70 is projected into the slot 1a, and recedes in the direction of the arrow Z1 while being in contact with the magnetic stripe 161 (see Fig. 1) of the magnetic card 160 when the magnetic card 160 passes through the slot 1a.

As shown in Fig. 3, the card insertion detecting unit 7 includes a reading unit 71, a timer 72, an output control unit 73, and an output unit 74. The timer 72 is an example of a "measuring portion" of the present invention, and the output control unit 73 is an example of a "switching portion" of the present invention.

The reading unit 71 includes a core 71b provided with a gap 71a and a coil 71c, and reads magnetic data recorded on the magnetic card 160. Specifically, when the magnetic card 160 is inserted to the slot 1a, the core 71b in the reading unit 71 is magnetized by the magnetization pattern of the magnetic card 160 so that a current flows through the coil 71c. The reading unit 71 thereby outputs a reproduction signal, for example, as shown in Fig. 4 to the output control unit 73. In Fig. 4, a preamble part and a body part of the reproduction signal are partially shown for simplification, but a postamble part is also read actually after the body part.

The timer 72 measures a time length from the start of reading the magnetic data by the reading unit 71 based on the reproduction signal of the reading unit 71.

The output control unit 73 controls whether or not to output the reproduction signal of the reading unit 71 from the output unit 74 based on the time length measured by the timer 72. Specifically, as shown in Fig. 4, the output control unit 73 outputs the reproduction signal of the reading unit 71 as is from the output unit 74 until a predetermined time length T1 elapses from the start of reading the magnetic data by the reading unit 71, and stops the output of the reproduction signal from the output unit 74 when the predetermined time length T1 elapses from the start of reading the magnetic data by the reading unit 71.

In this case, the predetermined time length T1 is set to be shorter than a time length T2 until the start of reading the body part of the magnetic data. Therefore, when the magnetic card 160 is inserted to the slot 1a, the output control unit 73 outputs only the reproduction signal for the preamble part of the magnetic data from the output unit 74 to a control unit 11 and does not output the reproduction signals for the body part and the postamble part of the magnetic data from the output unit 74.

Similarly, when the magnetic card 160 is ejected from the slot 1a, the output control unit 73 outputs a reproduction signal from the output unit 74 only for a predetermined time length from the start of reading the magnetic data by the reading unit 71. Thus, in time of ejecting the magnetic card 160, the output control unit 73 outputs only the reproduction signal for the postamble part of the magnetic data from the output unit 74 to the control unit 11, and does not output the reproduction signals for the body part and the preamble part of the magnetic data from the output unit 74.

When the magnetic card 160 passes through the slot 1a after stopping the output of the reproduction signal from the output unit 74, the output control unit 73 returns to a state of being capable of outputting a reproduction signal from the output unit 74. Therefore, the output control unit 73 outputs only the reproduction signal for the preamble part or the postamble part of the magnetic data from the output unit 74 every time the magnetic card 160 is inserted to or ejected from the slot 1a. Whether or not the magnetic card 160 passed through the slot 1a may be determined, for example, based on a reproduction signal of the reading unit 71 or based on the time length measured by the timer 72.

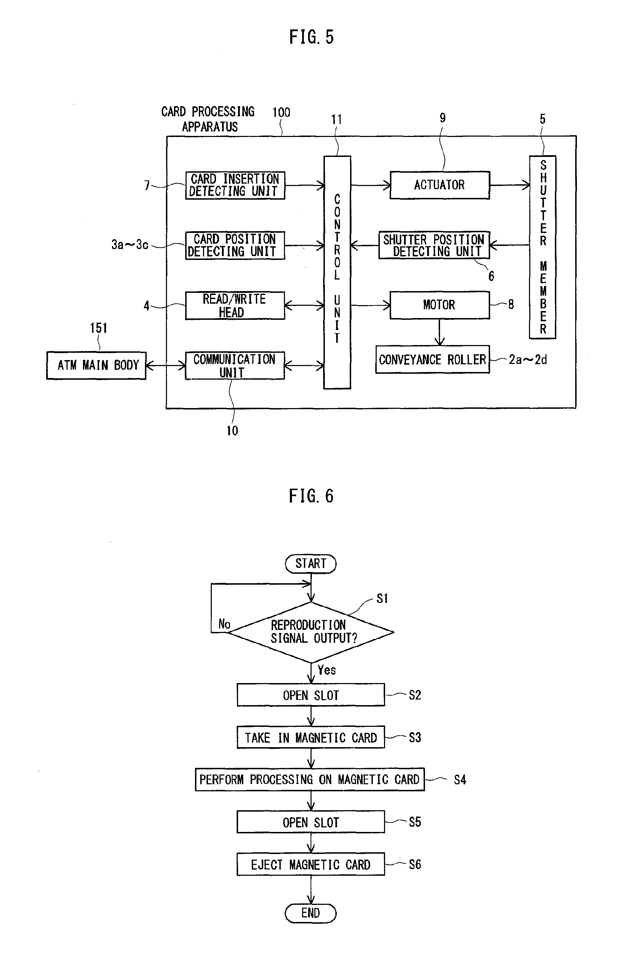

As shown in Fig. 5, the card processing apparatus 100 includes a motor 8 for driving the conveyance rollers 2a to 2d, an actuator 9 such as solenoid for moving the shutter member 5, a communication unit 10 for transmitting/receiving data to/from the ATM main body 151, and a control unit 11 that controls the operation of the card processing apparatus 100.

The control unit 11 includes a CPU, a ROM, a RAM, and the like. The control unit 11 determines that the magnetic card 160 is inserted to the slot 1a of the housing 1 when the reproduction signal for the preamble part of the magnetic data is input thereto from the card insertion detecting unit 7. The control unit 11 cannot acquire the magnetic information (the body part of the magnetic data) recorded on the magnetic card 160 based on the reproduction signal input thereto from the card insertion detecting unit 7, but merely needs to be capable of determining whether or not the magnetic card 160 is inserted.

Referring to Figs. 2 to 9, the operation of the card processing apparatus 100 according to the first embodiment of the present invention will be described. Each step in a flow chart of Fig. 6 is executed by the control unit 11 (see Fig. 5).

In the card processing apparatus 100, in step S1 of Fig. 6, it is determined whether or not the reproduction signal for the preamble part of the magnetic data is output from the output unit 74 (see Fig. 3) of the card insertion detecting unit 7. If determined that the reproduction signal is not output from the output unit 74 and thus the magnetic card 160 is not inserted to the slot 1a, step S1 is repeatedly performed. In other words, the card processing apparatus 100 waits until the magnetic card 160 is inserted thereto. When determined that the reproduction signal is output from the output unit 74 and thus the magnetic card 160 is inserted to the slot 1a, the process proceeds to step S2. As shown in Fig. 4, the output control unit 73 (see Fig. 3) stops the output of the reproduction signal from the output unit 74 after the elapse of the predetermined time length T1.

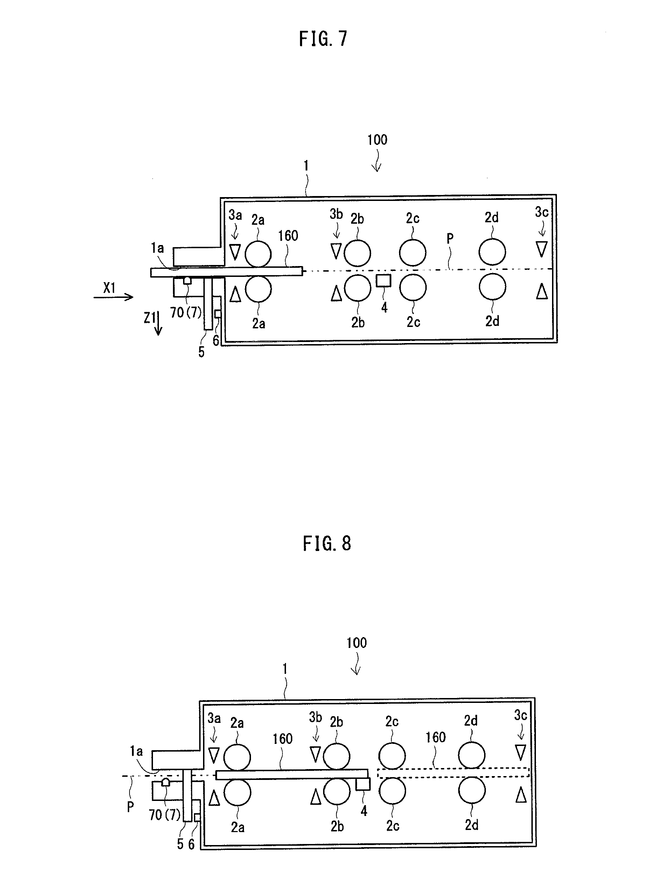

In step S2, the shutter member 5 (see Fig. 2) is moved in the opening direction (the direction of the arrow Z1) by the actuator 9 (see Fig. 5). The shutter member 5 thereby recedes from the conveyance path P so that the slot 1a is opened, as shown in Fig. 7.

In step S3, the conveyance rollers 2a to 2d (see Fig. 7) are forward rotated by driving the motor 8 (see Fig. 5). The magnetic card 160 is thereby transported in the direction of the arrow X1, and the magnetic card 160 is taken into the housing 1, as shown in Fig. 8. The slot 1a is to be closed by the shutter member 5 after the elapse of a predetermined time length from the opening thereof. The output control unit 73 returns from the state of stopping the output of a reproduction signal from the output unit 74 to the state of being capable of outputting a reproduction signal from the output unit 74 when the magnetic card 160 passes through the slot 1a.

In step S4, reading and writing of data from/on the magnetic card 160 are carried out by the read/write head 4 in the process of transporting the magnetic card 160 taken into the housing 1 to a position indicated by a broken line. In this process, the communication with the ATM main body 151 (see Fig. 5) is also carried out through the communication unit 10 (see Fig. 5).

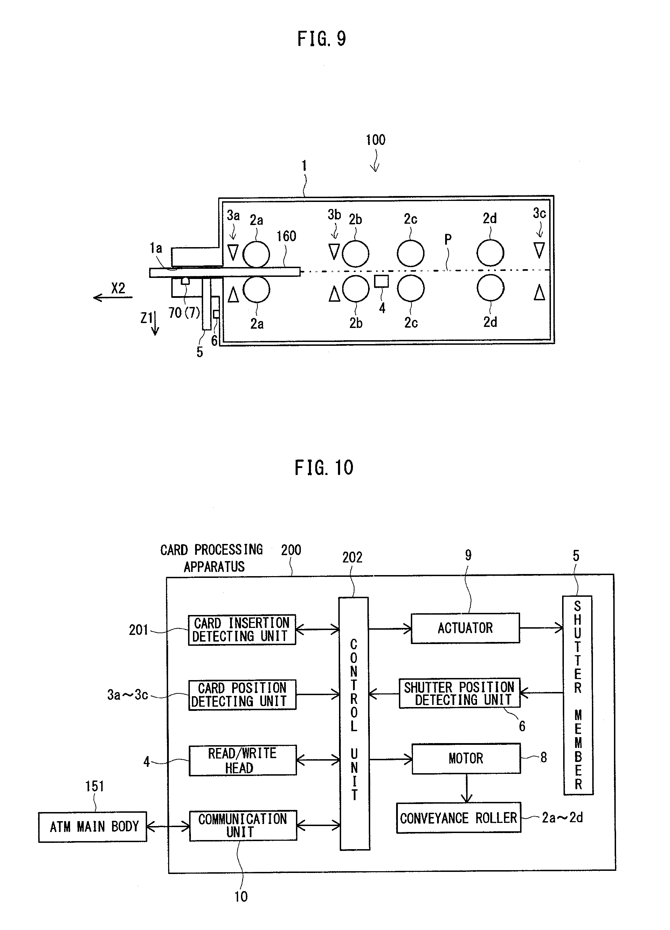

Thereafter, when a command for ejecting the magnetic card 160 is input from the ATM main body 151, in step S5, the shutter member 5 is moved in the direction of the arrow Z1 by the actuator 9. The shutter member 5 thereby recedes from the conveyance path P so that the slot 1a is opened, as shown in Fig. 9.

In step S6, the conveyance rollers 2a to 2d are reverse rotated by driving the motor 8. The magnetic card 160 is thereby transported in the direction of the arrow X2 and ejected from the slot 1a. Thereafter, when the magnetic card 160 is taken out, the slot 1a is closed by the shutter member 5, and a series of operations are terminated. In time of ejecting the magnetic card 160, similarly to the time of insertion thereof, a reproduction signal is output for the predetermined time length from the output unit 74 (the reproduction signal in this case is for the postamble part, as described earlier).

Thus, in the first embodiment, by employing the output control unit 73 for controlling whether or not to output a reproduction signal of the reading unit 71 from the output unit 74, only the reproduction signal for the preamble part of the magnetic data is output from the output unit 74 when the magnetic card 160 is inserted to the slot 1a. Therefore, illegally acquired data will include only the preamble part of the magnetic data even if there is performed an illegal act of directly connecting a lead wire to an output line of the magnetic head 70. Hence, magnetic information (the body part of the magnetic data) is prevented from being illegally acquired. As a result, in the card processing apparatus 100 according to the first embodiment, the insertion of the magnetic card 160 can be detected to open the slot 1a while preventing the magnetic information from being illegally acquired.

Furthermore, in the first embodiment, the timer 72 is employed for measuring the time length from the start of reading the magnetic data by the reading unit 71 and the output control unit 73 stops the output of a reproduction signal from the output unit 74 when the predetermined time length T1 elapses. Consequently, only the reproduction signal for the preamble part of the magnetic data can be easily output from the output unit 74 when the magnetic card 160 is inserted to the slot 1a.

Furthermore, in the first embodiment, when the magnetic card 160 is ejected from the slot 1a, only the reproduction signal for the postamble part of the magnetic data is output from the output unit 74. Thus, the magnetic information (the body part of the magnetic data) can be prevented from being illegally acquired when the magnetic card 160 is ejected from the slot 1a, similarly to the time of insertion of the magnetic card 160, in a case where there is performed an illegally act of directly connecting the lead wire to the output line of the magnetic head 70.

### <Second Embodiment>

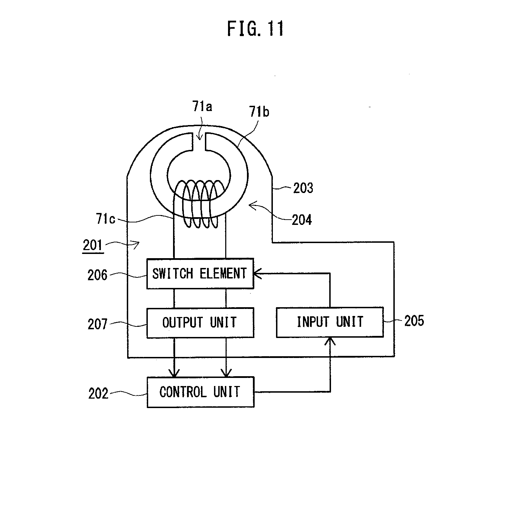

Next, with reference to Figs. 10 and 11, configurations of a card processing apparatus 200 according to the second embodiment of the present invention will be described.

As shown in Fig. 10, the card processing apparatus 200 according to the second embodiment includes a card insertion detecting unit 201 and a control unit 202. Other configurations in the card processing apparatus 200 are similar to the card processing apparatus 100 (see Fig. 2 and Fig. 5), and thus the description thereof will not be repeated. The card insertion detecting unit 201 is an example of a "magnetic data reading device" of the present invention.

As shown in Fig. 11, the card insertion detecting unit 201 is arranged inside a magnetic head 203. The card insertion detecting unit 201 includes a reading unit 204, an input unit 205, a switch element 206, and an output unit 207. The configurations of the reading unit 204 and the output unit 207 are respectively similar to the reading unit 71 and the output unit 74 of the first embodiment (Fig. 3). The switch element 206 is an example of a "switching portion" of the present invention.

A control signal for switching the ON/OFF state of the switch element 206 is input to the input unit 205 from the control unit 202. The switch element 206 switches whether or not to output a reproduction signal of the reading unit 204 from the output unit 207 based on the control signal input to the input unit 205.

For example, the switch element 206 is in a state of being capable of outputting a reproduction signal of the reading unit 204 from the output unit 207 (ON state) when a control signal of H (High) level is input to the input unit 205, and is in a state of not outputting a reproduction signal of the reading unit 204 from the output unit 207 (OFF state) when a control signal of L (Low) level is input to the input unit 205.

The control unit 202 includes a CPU, a ROM, a RAM, and the like and outputs the control signal to the card insertion detecting unit 201. The control unit 202 determines that the magnetic card 160 is inserted to the slot 1a of the housing 1 when the reproduction signal for the preamble part of the magnetic data is input thereto from the card insertion detecting unit 201. The control unit 202 switches the control signal to be output from H level to L level when determining that the magnetic card 160 is inserted. The control unit 202 switches the control signal to be output from L level to H level when determining that the magnetic card 160 is ejected and taken out.

The control unit 202 cannot acquire the magnetic information (the body part of the magnetic data) recorded on the magnetic card 160 based on the reproduction signal input thereto from the card insertion detecting unit 201, but merely needs to be capable of determining whether or not the magnetic card 160 is inserted.

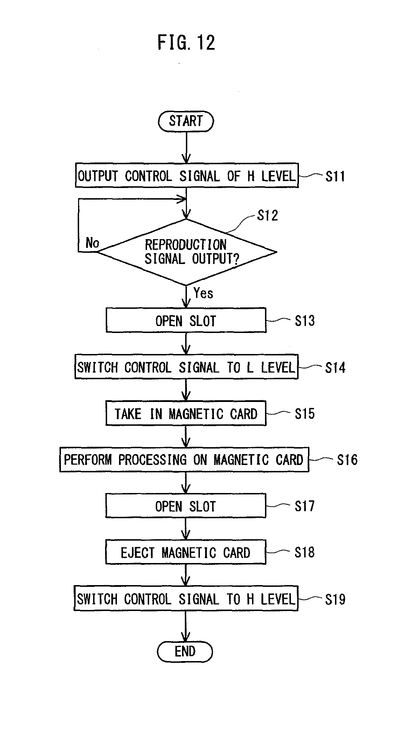

Referring to Figs. 10 to 16, the operation of the card processing apparatus 200 according to the second embodiment of the present invention will be described. Each step in a flow chart of Fig. 12 is executed by the control unit 202 (see Fig. 10).

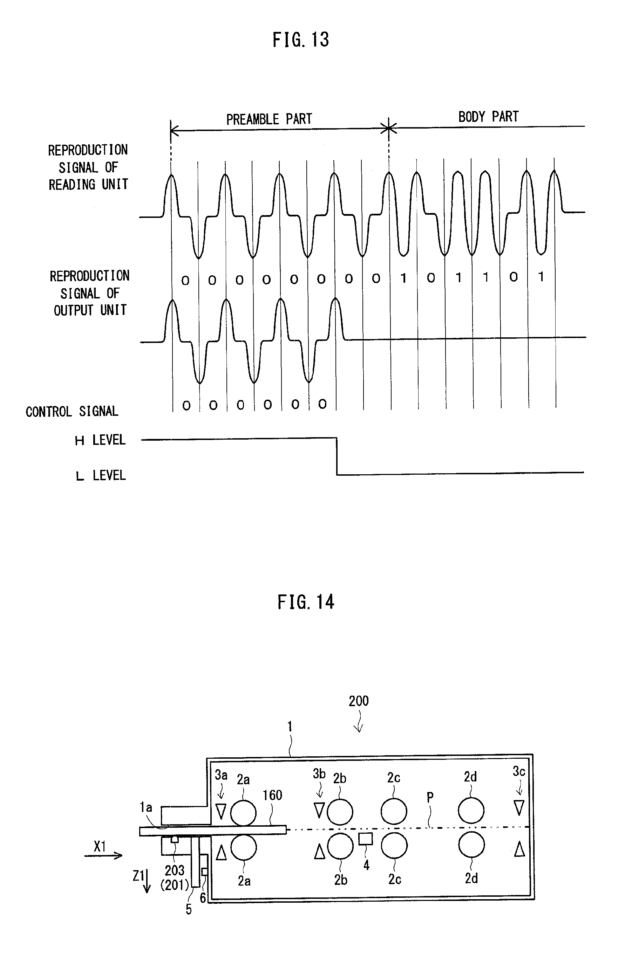

First, in step S11 of Fig. 12, a control signal of H level (see Fig. 13) is output from the control unit 202 to the input unit 205 (see Fig. 11) of the card insertion detecting unit 201 in the card processing apparatus 200. Then, the switch element 206 is brought into the ON state in the card insertion detecting unit 201, whereby a reproduction signal of the reading unit 204 can be output from the output unit 207.

In step S12, it is determined whether or not the reproduction signal for the preamble part of the magnetic data is output from the output unit 207 of the card insertion detecting unit 201. If determined that the reproduction signal is not output from the output unit 207 and thus the magnetic card 160 is not inserted to the slot 1a, step S12 is repeatedly performed. In other words, the card processing apparatus 200 waits until the magnetic card 160 is inserted thereto. When determined that the reproduction signal (see Fig. 13) is output from the output unit 207 and thus the magnetic card 160 is inserted to the slot 1a, the process proceeds to step S13.

In step S13, the shutter member 5 is moved in the opening direction (the direction of the arrow Z1) by the actuator 9 (see Fig. 10). The shutter member 5 thereby recedes from the conveyance path P so that the slot 1a is opened, as shown in Fig. 14.

As shown in Fig. 13, in step S14, the control signal input from the control unit 202 to the input unit 205 is switched to L level. The switch element 206 is then brought into the OFF state in the card insertion detecting unit 201, whereby a reproduction signal of the reading unit 204 cannot be output from the output unit 207.

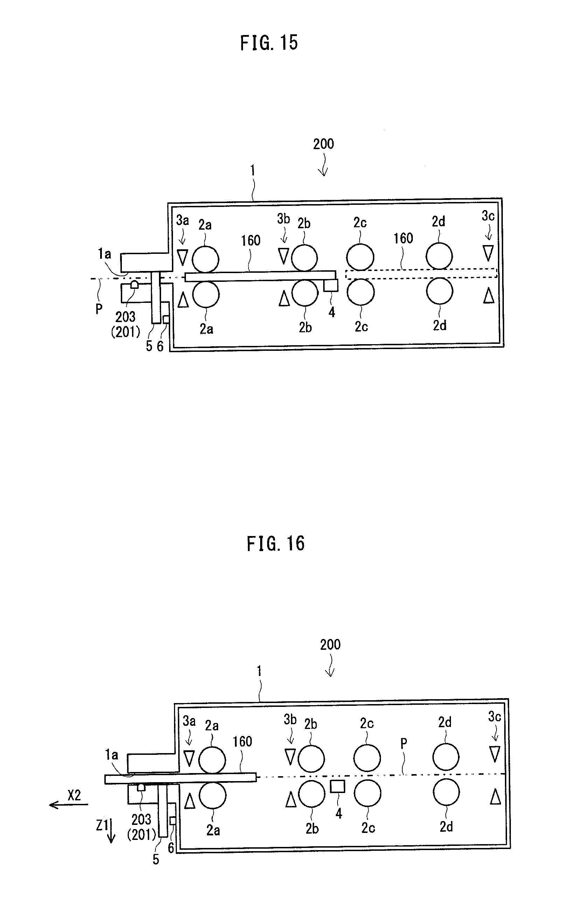

In step S15, the conveyance rollers 2a to 2d (see Fig. 14) are forward rotated by driving the motor 8 (see Fig. 10). The magnetic card 160 is thereby transported in the direction of the arrow X1, and the magnetic card 160 is taken into the housing 1, as shown in Fig. 15. At this time, since the control signal of L level is input to the input unit 205, the reproduction signal read by the reading unit 204 is not output from the output unit 207 as shown in Fig. 13. The slot 1a is to be closed by the shutter member 5 after the elapse of a predetermined time length from the opening thereof.

In step S16, reading and writing of data from/on the magnetic card 160 are carried out by the read/write head 4 in the process of transporting the magnetic card 160 taken into the housing 1 to a position indicated by a broken line. In this process, the communication with the ATM main body 151 (see Fig. 10) is also carried out through the communication unit 10 (see Fig. 10).

Thereafter, when a command for ejecting the magnetic card 160 is input from the ATM main body 151, in step S17, the shutter member 5 is moved in the direction of the arrow Z1 by the actuator 9. The shutter member 5 thereby recedes from the conveyance path P so that the slot 1a is opened, as shown in Fig. 16.

In step S18, the conveyance rollers 2a to 2d are reverse rotated by driving the motor 8. The magnetic card 160 is thereby transported in the direction of the arrow X2 and ejected from the slot 1a. At this time, since the control signal of L level is input to the input unit 205, the reproduction signal read by the reading unit 204 is not output from the output unit 207. Thereafter, when the magnetic card 160 is taken out, the slot 1a is closed by the shutter member 5.

Finally, in step S19, the control signal input to the input unit 205 from the control unit 202 is switched to H level then a series of operations are terminated.

In the second embodiment, as described above, the control unit 202 switches the control signal to L level when the magnetic card 60 is inserted to the slot 1a and thus the reproduction signal for the preamble part of the magnetic data is input to the control unit 202, so that a reproduction signal to be read by the reading unit 204 is not output from the output unit 207. Therefore, illegally acquired data will include only the preamble part of the magnetic data even if there is performed an illegal act of directly connecting a lead wire to an output line of the magnetic head 203. Hence, magnetic information (the body part of the magnetic data) is prevented from being illegally acquired. As a result, in the card processing apparatus 200 according to the second embodiment, the insertion of the magnetic card 160 can be detected to open the slot 1a while preventing the magnetic information from being illegally acquired.

Furthermore, in the second embodiment, a reproduction signal to be read by the reading unit 204 is not output from the output unit 207 in time of ejecting the magnetic card 160 by switching the control signal to H level after the magnetic card 160 is ejected and taken out from the slot 1a. Hence, the magnetic information (the body part of the magnetic data) is prevented from being illegally acquired also in time of ejecting the magnetic card 160.

### <Third Embodiment>

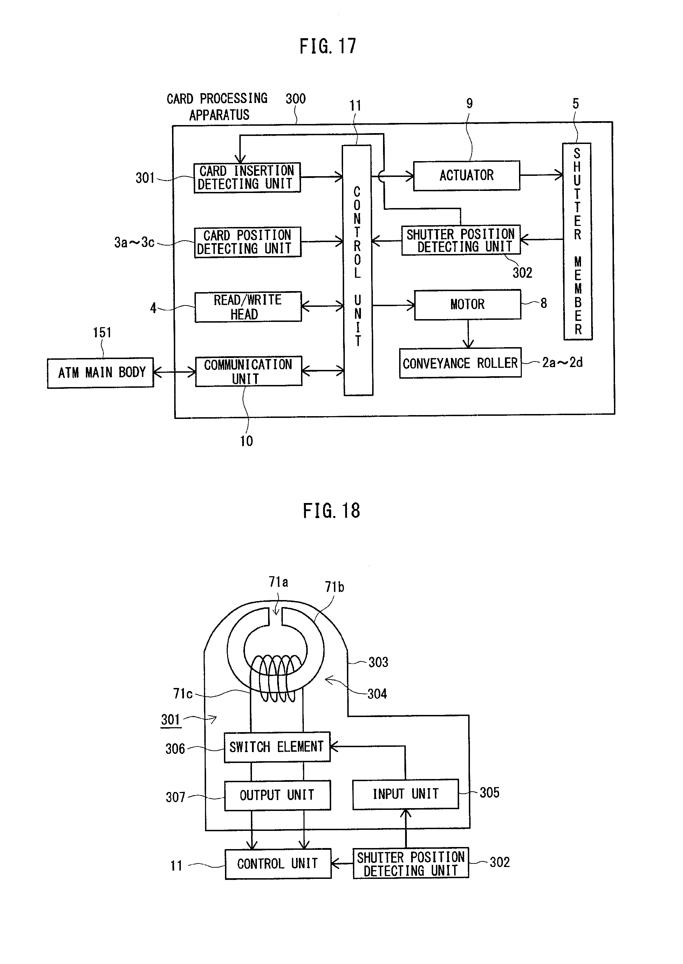

Next, with reference to Figs. 17 and 18, configurations of a card processing apparatus 300 according to the third embodiment of the present invention will be described.

As shown in Fig. 17, the card processing apparatus 300 according to the third embodiment includes a card insertion detecting unit 301 and a shutter position detecting unit 302. Other configurations in the card processing apparatus 300 are similar to the card processing apparatus 100 (see Fig. 2 and Fig. 5), and thus the description thereof will not be repeated. The card insertion detecting unit 301 is an example of a "magnetic data reading device" of the present invention.

As shown in Fig. 18, the card insertion detecting unit 301 is arranged inside a magnetic head 303. The card insertion detecting unit 301 includes a reading unit 304, an input unit 305, a switch element 306, and an output unit 307. The configurations of the reading unit 304, the switch element 306 and the output unit 307 are respectively similar to the reading unit 204, the switch element 206 and the output unit 207 of the second embodiment (Fig. 11). The switch element 306 is an example of a "switching portion" of the present invention.

A control signal for switching the ON/OFF state of the switch element 306 is input to the input unit 305 from the shutter position detecting unit 302. For example, the shutter position detecting unit 302 is in the ON state when the shutter member 5 is at the closing position, and outputs a control signal of H level. The shutter position detecting unit 302 is in the OFF state when the shutter member 5 is at any position other than the closing position including the opening position, and outputs a control signal of L level.

Therefore, the card insertion detecting unit 301 is in a state of being capable of outputting a reproduction signal of the reading unit 304 from the output unit 307 when the shutter member 5 is at the closing position, and is in a state of not outputting a reproduction signal of the reading unit 304 from the output unit 307 when the shutter member 5 is at the opening position.

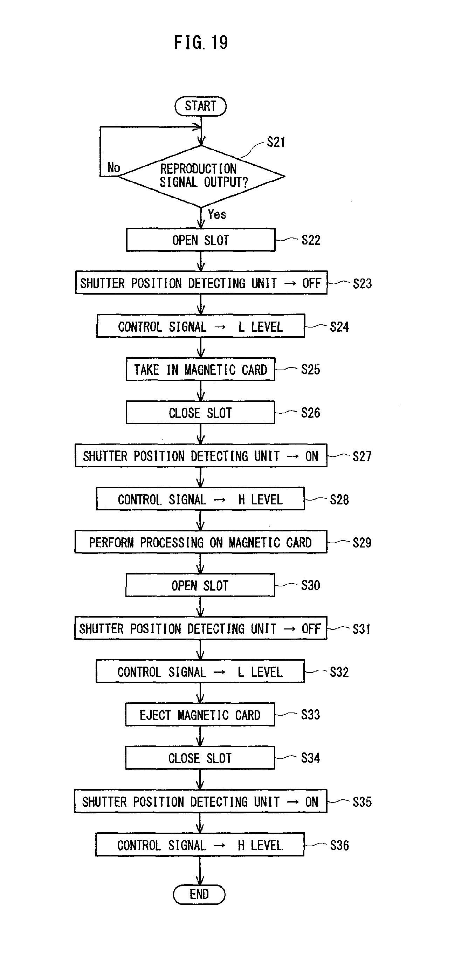

Referring to Figs. 17 to 23, the operation of the card processing apparatus 300 according to the third embodiment of the present invention will be described. Each step in a flow chart of Fig. 19 is executed by the control unit 11 (see Fig. 17). Before the magnetic card 160 is inserted, as the shutter member 5 is at the closing position, the shutter position detecting unit 302 outputs the control signal of H level, and the card insertion detecting unit 301 is in a state of being capable of outputting a reproduction signal of the reading unit 304 from the output unit 307.

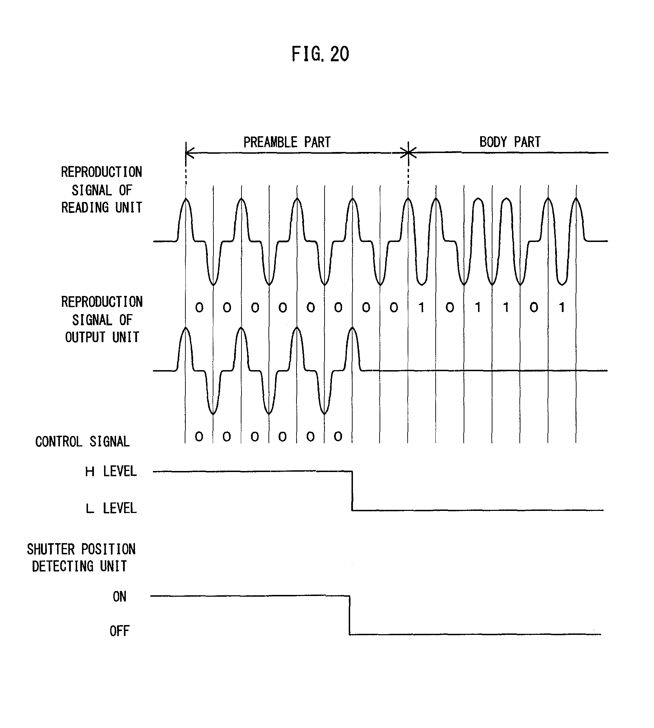

In the card processing apparatus 300, in step S21 of Fig. 19, it is determined whether or not the reproduction signal for the preamble part of the magnetic data is output from the output unit 307 (see Fig. 18) of the card insertion detecting unit 301. If determined that the reproduction signal is not output from the output unit 307 and thus the magnetic card 160 is not inserted to the slot 1a, step S21 is repeatedly performed. In other words, the card processing apparatus 300 waits until the magnetic card 160 is inserted thereto. When determined that the reproduction signal (see Fig. 20) is output from the output unit 307 and thus the magnetic card 160 is inserted to the slot 1a, the process proceeds to step S22.

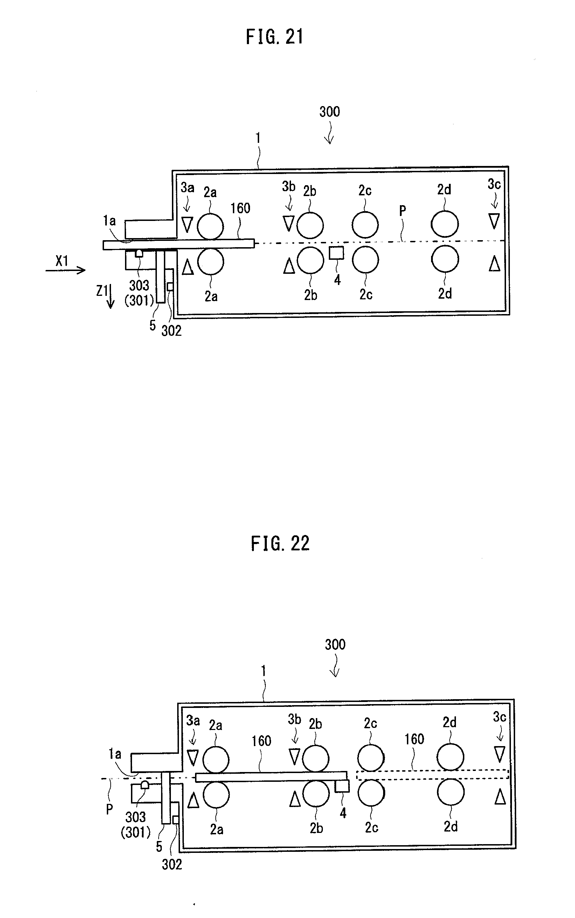

In step S22, the shutter member 5 is moved in the opening direction (the direction of the arrow Z1) by the actuator 9 (see Fig. 17). The shutter member 5 thereby recedes from the conveyance path P so that the slot 1a is opened, as shown in Fig. 21. Then, in step S23, the shutter position detecting unit 302 is switched to the OFF state (see Fig. 20). Thus, in step S24, the control signal output from the shutter position detecting unit 302 is switched to L level. Therefore, the card insertion detecting unit 301 is in the state of not outputting a reproduction signal of the reading unit 304 from the output unit 307.

In step S25, the conveyance rollers 2a to 2d (see Fig. 21) are forward rotated by driving the motor 8 (see Fig. 17). The magnetic card 160 is thereby transported in the direction of the arrow X1, and the magnetic card 160 is taken into the housing 1, as shown in Fig. 22. At this time, since the control signal of L level is input to the input unit 305, the reproduction signal read by the reading unit 304 is not output from the output unit 307 as shown in Fig. 20.

In step S26, the shutter member 5 is moved in the closing direction (the direction of the arrow Z2) by the actuator 9. The slot 1a is thereby closed by the shutter member 5 as shown in Fig. 22. Then, in step S27, the shutter position detecting unit 302 is switched to the ON state. Thus, in step S28, the control signal output from the shutter position detecting unit 302 is switched to H level. Therefore, at this time, although the card insertion detecting unit 301 is in a state of being capable of outputting the reproduction signal of the reading unit 304 from the output unit 307, the reproduction signal cannot be read by the reading unit 304 since the magnetic card 160 does not pass through the slot 1a.

In step S29, reading and writing of data from/on the magnetic card 160 are carried out by the read/write head 4 in the process of transporting the magnetic card 160 taken into the housing 1 to a position indicated by a broken line. In this process, the communication with the ATM main body 151 (see Fig. 17) is also carried out through the communication unit 10 (see Fig. 17).

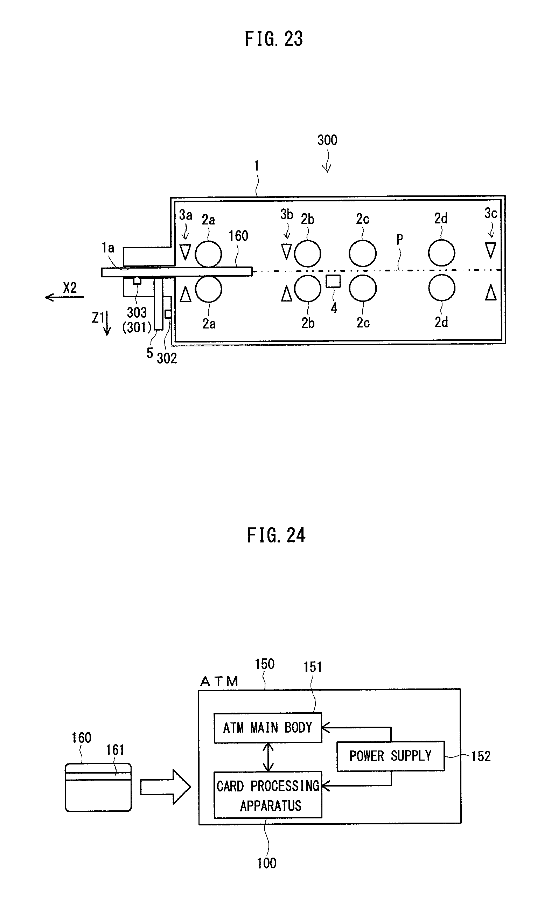

Thereafter, when a command for ejecting the magnetic card 160 is input from the ATM main body 151, in step S30, the shutter member 5 is moved in the direction of the arrow Z1 by the actuator 9. The shutter member 5 thereby recedes from the conveyance path P so that the slot 1a is opened, as shown in Fig. 23. Then, in step S31, the shutter position detecting unit 302 is switched to the OFF state. Thus, in step S32, the control signal output from the shutter position detecting unit 302 is switched to L level. Therefore, the card insertion detecting unit 301 is in the state of not outputting a reproduction signal of the reading unit 304 from the output unit 307.

In step S33, the conveyance rollers 2a to 2d are reverse rotated by driving the motor 8. The magnetic card 160 is thereby transported in the direction of the arrow X2 and ejected from the slot 1a. At this time, since the control signal of L level is input to the input unit 305, the reproduction signal read by the reading unit 304 is not output from the output unit 307.

Thereafter, when the magnetic card 160 is taken out, the slot 1a is closed by the shutter member 5 in step S34. Then, in step S35, the shutter position detecting unit 302 is switched to the ON state. Thus, in step S36, the control signal output from the shutter position detecting unit 302 is switched to H level and a series of operations are terminated.

In the third embodiment, as described above, when the reproduction signal for the preamble part of the magnetic data is input to the control unit 11 by the insertion of the magnetic card 160 to the slot 1a, the control unit 11 moves the shutter member 5 so as to open the slot 1a. At this time, the shutter position detecting unit 302 is switched to the OFF state, and thus the control signal output from the shutter position detecting unit 302 is switched to L level. Consequently, in the card insertion detecting unit 301, a reproduction signal read by the reading unit 304 is not output from the output unit 307. Therefore, illegally acquired data will include only the preamble part of the magnetic data even if there is performed an illegal act of directly connecting a lead wire to an output line of the magnetic head 303. Hence, magnetic information (the body part of the magnetic data) is prevented from being illegally acquired. As a result, in the card processing apparatus 300 according to the third embodiment, the insertion of the magnetic card 160 can be detected to open the slot 1a while preventing the magnetic information from being illegally acquired.

Furthermore, in the third embodiment, a reproduction signal to be read by the reading unit 304 is not output from the output unit 307 in time of ejecting the magnetic card 160 by switching the control signal to H level after the magnetic card 160 is ejected and taken out from the slot 1a. Hence, the magnetic information (the body part of the magnetic data) is prevented from being illegally acquired also in time of ejecting the magnetic card 160.

### <Fourth Embodiment>

Next, with reference to Figs. 24 to 29, configurations of a card processing apparatus 100 according to the fourth embodiment of the present invention will be described. Most of the configurations of the card processing apparatus 100 and the ATM 150 are similar to those of the first embodiment, and thus the description on the redundant portion will not be repeated. The card insertion detecting unit 7 will be hereinafter described in detail.

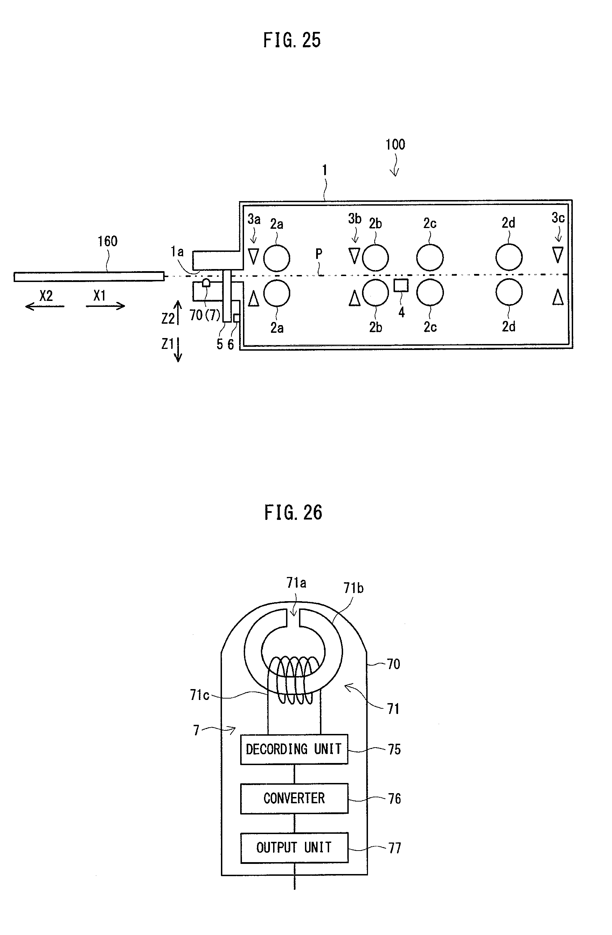

As shown in Fig. 26, the card insertion detecting unit 7 is arranged inside the magnetic head 70. The magnetic head 70 is arranged to be movable in the direction of the arrow Z1 and in the direction of the arrow Z2 (see Fig. 25). Specifically, the magnetic head 70 is projected into the slot 1a, and recedes in the direction of the arrow Z1 while being in contact with the magnetic stripe 161 (see Fig. 24) of the magnetic card 160 when the magnetic card 160 is inserted to the slot 1a. The magnetic head 70 includes the card insertion detecting unit 7 for each track of the magnetic stripe 161 (see Fig. 24).

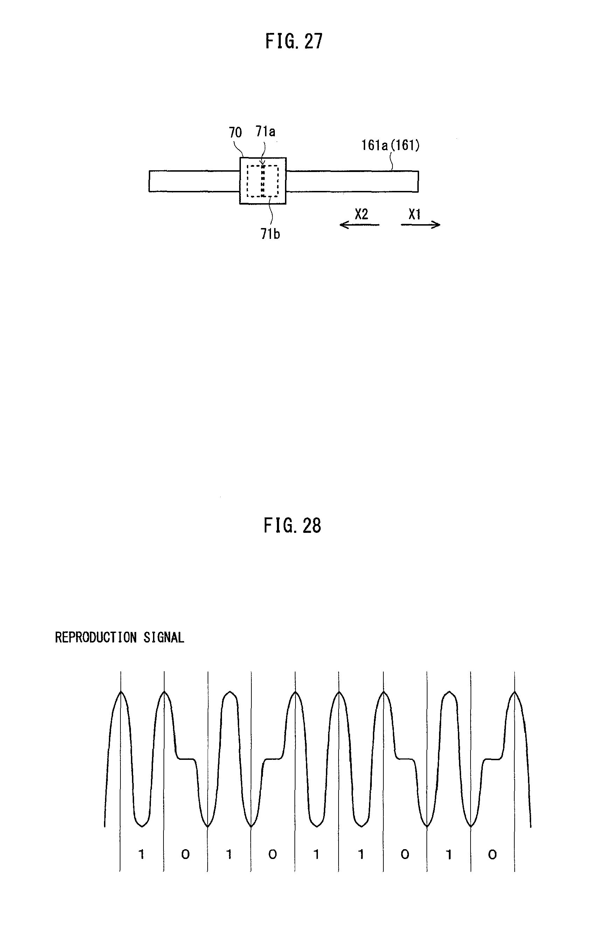

As shown in Fig. 27, the magnetic head 70 is arranged to be orthogonal to the direction in which the track 161a of the magnetic stripe 161 extends when the magnetic card 160 is inserted to the slot 1a, that is, the recording directions of magnetic data (the direction of the arrow X1 and the direction of the arrow X2).

As shown in Fig. 26, the card insertion detecting unit 7 includes a reading unit 71, a decoding unit 75, a converter 76 and an output unit 77. The converter 76 is an example of a "conversion portion" of the present invention. The reading unit 71 includes a core 71b provided with a gap 71a and a coil 71c, and reads magnetic data recorded on the magnetic card 160.

In the reading unit 71, when the magnetic card 160 is inserted to the slot 1a, the core 71b is magnetized by the magnetization pattern of the magnetic card 160 so that a current flows through the coil 71c. The reading unit 71 thereby outputs a reproduction signal, for example, as shown in Fig. 28 to the decoding unit 75. In Fig. 28, the reproduction signal is partially shown for simplification. The actual reproduction signal differs depending on the magnetic data recorded on the magnetic stripe 161 of the magnetic card 160.

The decoding unit 75 determines the presence of a detection pulse for every predetermined cycle to decode the reproduction signal to binary data ("101011010" in the example of Fig. 28). The converter 76 irreversibly converts the magnetic data read from the magnetic card 160 by extracting predetermined data from the data decoded by the decoding unit 75. For example, in a case where the data decoded by the decoding unit 75 is "101011010", such data is converted to "100" by extracting (sampling) the data for every three bits. It is impossible to restore the original data "101011010" from the converted data "100". The output unit 77 outputs the data irreversibly converted by the converter 76 to a control unit 11 to be described later. In other words, the output unit 77 outputs to the control unit 11 the data that is impossible to be restored to the magnetic information recorded on the magnetic card 160.

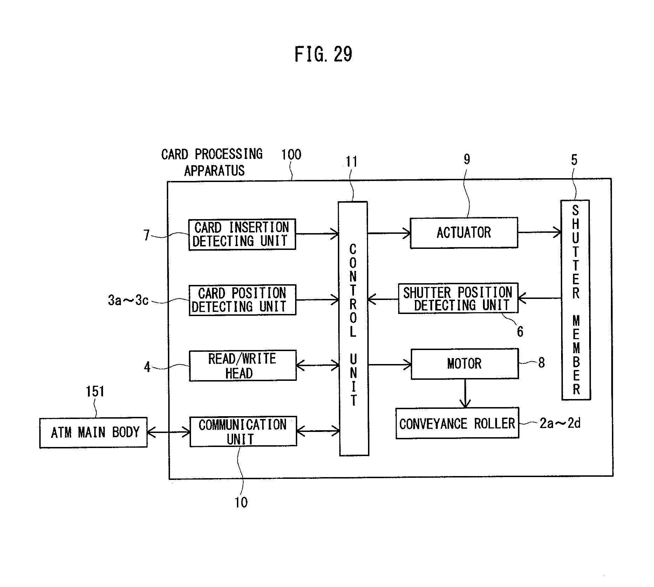

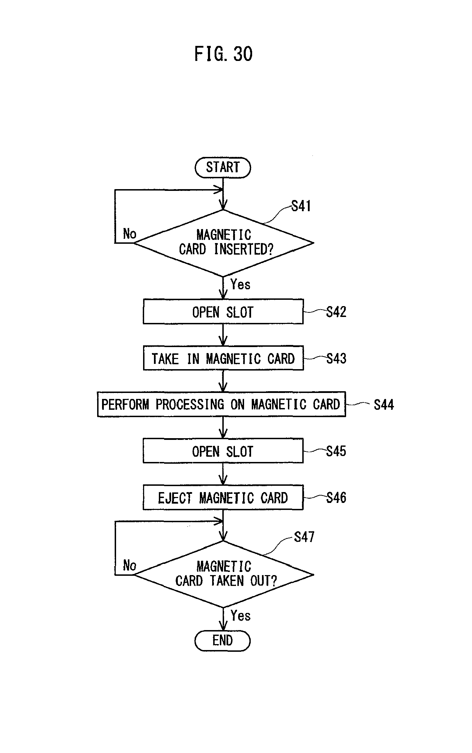

Referring to Figs. 25, 26 and 29 to 33, the operation of the card processing apparatus 100 according to the fourth embodiment of the present invention will be described. Each step in a flow chart of Fig. 30 is executed by the control unit 11 (see Fig. 29).

First, in step S41 of Fig. 30, it is determined whether or not the magnetic card 160 (see Fig. 25) is inserted to the slot 1a (see Fig. 25) of the housing 1 based on the detection result of the card insertion detecting unit 7 (see Fig. 25) in the card processing apparatus 100. Specifically, it is determined whether or not the data irreversibly converted by the converter 76 (see Fig. 26) is output from the output unit 77 (see Fig. 26). If determined that the data irreversibly converted is not output from the output unit 77 and thus the magnetic card 160 is not inserted to the slot 1a, step S41 is repeatedly performed. In other words, the card processing apparatus 100 waits until the magnetic card 160 is inserted thereto. When determined that the data irreversibly converted is output from the output unit 77 and thus the magnetic card 160 is inserted to the slot 1a, the process proceeds to step S42.

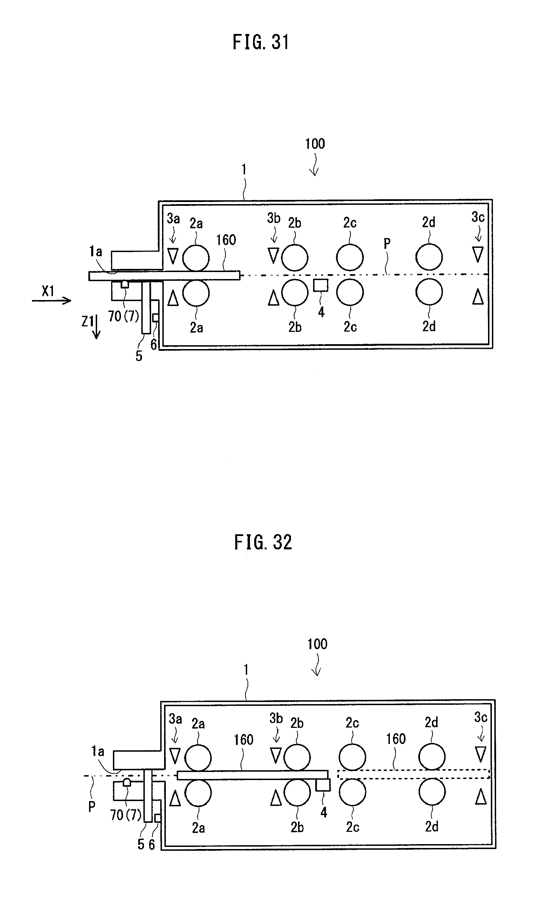

In step S42, the shutter member 5 (see Fig. 25) is moved in the opening direction (the direction of the arrow Z1) by the actuator 9 (see Fig. 29). The shutter member 5 thereby recedes from the conveyance path P so that the slot 1a is opened, as shown in Fig. 31. Then, in step S43, the conveyance rollers 2a to 2d (see Fig. 31) are forward rotated by driving the motor 8 (see Fig. 29). The magnetic card 160 is thereby transported in the direction of the arrow X1, and the magnetic card 160 is taken into the housing 1, as shown in Fig. 32. The slot 1a is to be closed by the shutter member 5 after the elapse of a predetermined time length from the opening thereof.

In step S44, reading and writing of data from/on the magnetic card 160 are carried out by the read/write head 4 in the process of transporting the magnetic card 160 taken into the housing 1 to a position indicated by a broken line. In this process, the communication with the ATM main body 151 (see Fig. 29) is also carried out through the communication unit 10 (see Fig. 29).

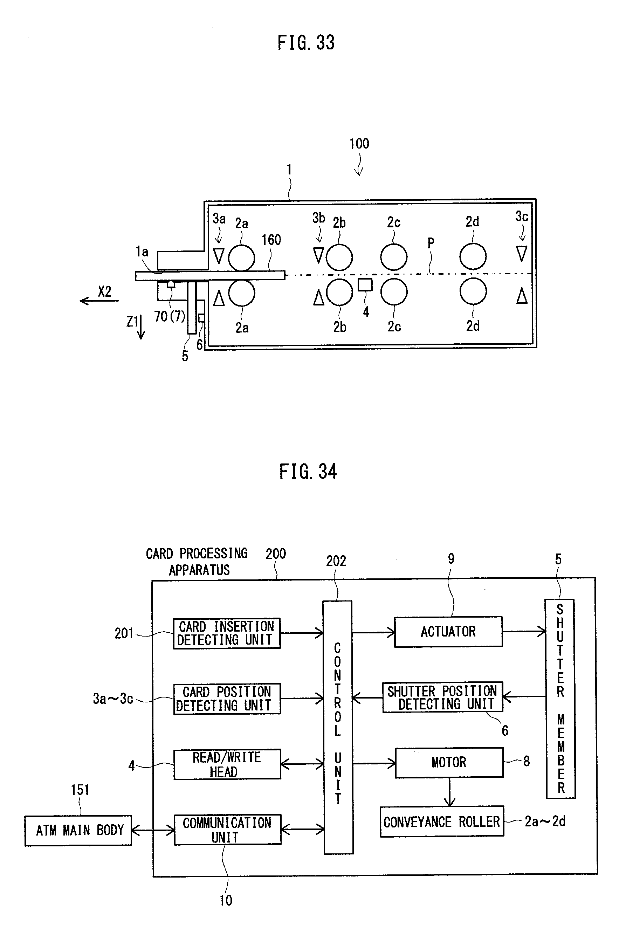

Thereafter, when a command for ejecting the magnetic card 160 is input from the ATM main body 151, in step S45, the shutter member 5 is moved in the direction of the arrow Z1 by the actuator 9. The shutter member 5 thereby recedes from the conveyance path P so that the slot 1a is opened, as shown in Fig. 33. Then, in step S46, the conveyance rollers 2a to 2d are reverse rotated by driving the motor 8. The magnetic card 160 is thereby transported in the direction of the arrow X2 and ejected from the slot 1a.

In step S47, it is determined whether or not the magnetic card 160 is taken out from the slot 1a based on the detection result of the card insertion detecting unit 7. If determined that the magnetic card 160 is not taken out, step S47 is repeatedly performed. In other words, the card processing apparatus 100 waits until the magnetic card 160 is taken out therefrom. When determined that the magnetic card 160 is taken out, the slot 1a is closed by the shutter member 5 and a series of operations are terminated.

In the fourth embodiment, as described above, the converter 76 for irreversibly converting magnetic data read by the reading unit 71 and the output unit 77 for outputting data irreversibly converted by the converter 76 are employed. Consequently, even if the converted data is illegally acquired through the lead wire from the output unit 77 by directly connecting the lead wire to the output line of the magnetic head 70, the magnetic information can be prevented from being illegally acquired since the magnetic information (the content of the magnetic data) cannot be restored from the converted data. As a result, in the card processing apparatus 100 according to the fourth embodiment, the insertion of the magnetic card 160 can be detected to open the slot 1a while preventing the magnetic information from being illegally acquired.

Furthermore, in the forth embodiment, the data that cannot be restored can be easily created from the magnetic data read by the reading unit 71 by extracting predetermined data from the decoded data to irreversibly convert the magnetic data read from the magnetic card 160.

Furthermore, in the fourth embodiment, differently from a case of encrypting magnetic data, there is no possibility where the encrypted magnetic data is decoded and the magnetic information is illegally acquired when the encrypted magnetic data and the key data are plagiarized, by irreversibly converting the magnetic data read from the magnetic card 160.

### <Fifth Embodiment>

Next, with reference to Figs. 25 and 34 to 37, configurations of a card processing apparatus 200 according to the fifth embodiment of the present invention will be described.

As shown in Fig. 34, the card processing apparatus 200 according to the fifth embodiment includes a card insertion detecting unit 201 and a control unit 202. The card insertion detecting unit 201 is an example of a "data reading device" of the present invention. A configuration of the card processing apparatus 200 is similar to Fig. 25, and thus the description thereof will not be repeated.

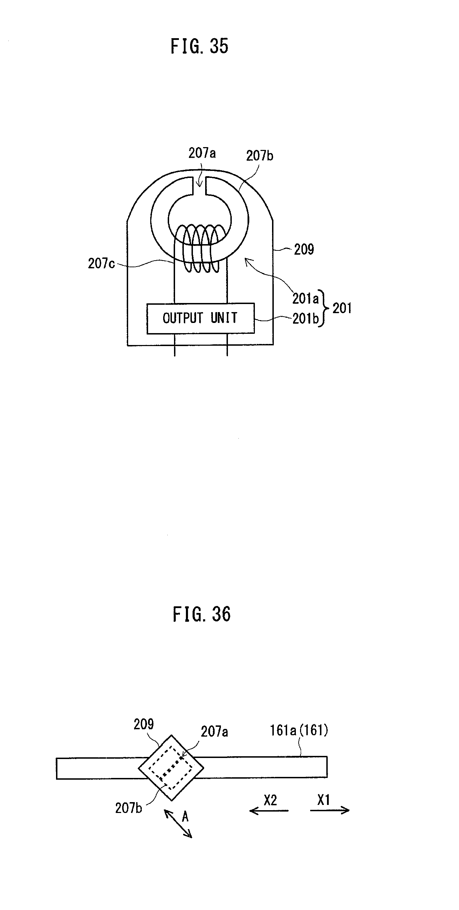

As shown in Fig. 35, the card insertion detecting unit 201 includes a reading unit 201a that reads magnetic data recorded on the magnetic card 160 and an output unit 201b that outputs a reproduction signal of the reading unit 201a. The reading unit 201a includes a core 207b provided with a gap 207a and a coil 71c.

The card insertion detecting unit 201 is arranged inside a magnetic head 209. The magnetic head 209 includes the card insertion detecting unit 201 for each track of a magnetic stripe 161 (see Fig. 24).

As shown in Fig. 36, the magnetic head 209 is arranged to be incline with respect to the direction in which the track 161a of the magnetic stripe 161 extends when the magnetic card 160 is inserted to the slot 1a (see Fig. 25), that is, the recording directions of magnetic data (the direction of the arrow X1 and the direction of the arrow X2). In other words, the reading unit 201a of the card insertion detecting unit 201 is arranged to be incline with respect to the recording directions of magnetic data.

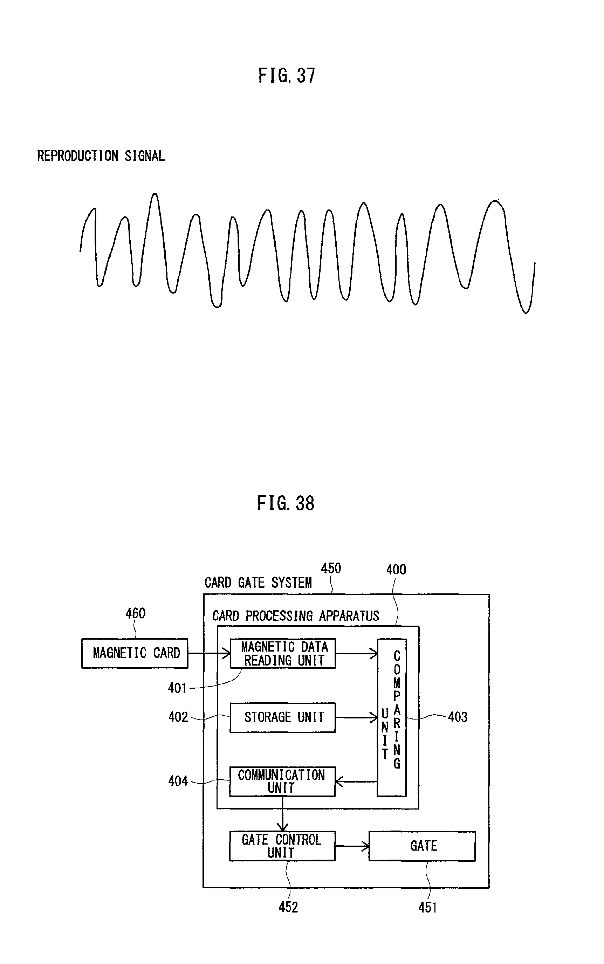

Thus, the gap 207a of the reading unit 201a is arranged to incline with respect to the recording direction of magnetic data, and the reading unit 201a reads the magnetic data recorded on the magnetic card 160 simultaneously for a plurality of bits. In this case, the intensity of a magnetic field (the magnetic field of the component in the A direction) that appears in the gap 207a due to the magnetic stripe 161 is lowered and the mixture of the data of adjacent bits occurs. Hence, when the magnetic data recorded on the magnetic card 160 is, for example, "101011010", the reading unit 201a outputs a reproduction signal shown in Fig. 37 to the output unit 201b. This reproduction signal significantly differs from the original reproduction signal shown in Fig. 28, and thus it is impossible to restore the original data from the signal of Fig. 37. In other words, the reading unit 201a reads the signal having a state of being impossible to be restored to the magnetic information recorded on the magnetic card 160.

The output unit 201b outputs to the control unit 202 the reproduction signal that is impossible to be restored to the magnetic information recorded on the magnetic card 160. The control unit 202 determines that the magnetic card 160 is inserted to the slot 1a of the housing 1 when the reproduction signal is input thereto from the card insertion detecting unit 201. The control unit 202 cannot recognize the magnetic information (the content of the magnetic data) recorded on the magnetic card 160 based on the reproduction signal input thereto from the card insertion detecting unit 201, but merely needs to be capable of determining whether or not the magnetic card 160 is inserted.

Other configurations in the card processing apparatus 200 are similar to the above-described card processing apparatus 100.

In the fifth embodiment, as described above, the magnetic head 209 and the reading unit 201a are arranged to be incline with respect to the recording directions of magnetic data. Thus, even if the reproduction signal is illegally acquired through the lead wire from the output unit 201b by directly connecting the lead wire to the output line of the magnetic head 209, the magnetic information can be prevented from being illegally acquired since the magnetic information (the content of the magnetic data) cannot be restored from the acquired reproduction signal. As a result, in the card processing apparatus 200 according to the fifth embodiment, the insertion of the magnetic card 160 can be detected to open the slot 1a while preventing the magnetic information from being illegally acquired.

Furthermore, in the fifth embodiment, by reading the signal having a state of being impossible to be restored to the magnetic information recorded on the magnetic card 160, the signal that cannot be restored can be easily output.

### <Sixth Embodiment>

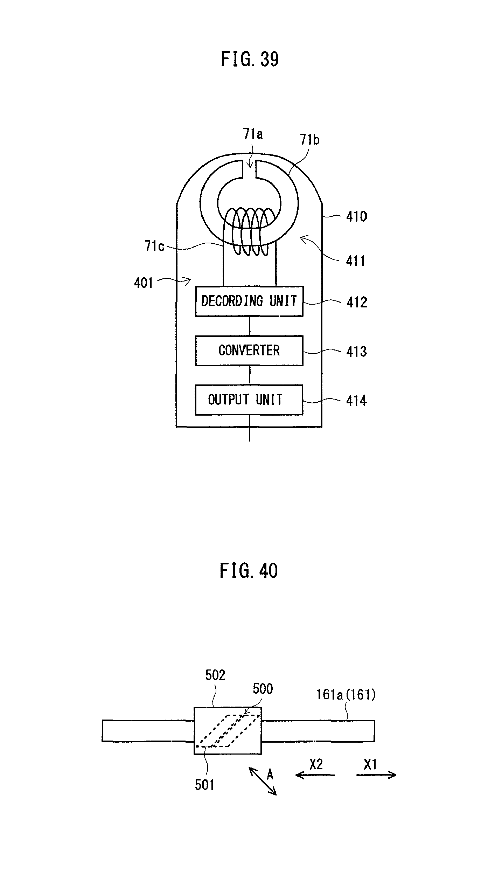

Next, with reference to Figs. 38 and 39, configurations of a card processing apparatus 400 according to the sixth embodiment of the present invention and a card gate system 450 will be described.

As shown in Fig. 38, the card gate system 450 includes a gate 451, a gate control unit 452 that controls an open/close state of the key of the gate 451, and the card processing apparatus 400.

The card processing apparatus 400 according to the sixth embodiment includes a magnetic data reading unit 401 that reads magnetic data of the magnetic card 160, a storage unit 402, a comparing unit 403 and a communication unit 404. The magnetic data reading unit 401 is an example of a "data reading device" of the present invention.

As shown in Fig. 39, the magnetic data reading unit 401 is arranged inside a magnetic head 410. The magnetic data reading unit 401 includes a reading unit 411, a decoding unit 412, a converter 413 and an output unit 414. The configurations of the reading unit 411, the decoding unit 412 and the output unit 414 are respectively similar to the reading unit 71, the decoding unit 75 and the output unit 77 of the fourth embodiment (Fig. 26). The converter 413 is an example of a "conversion portion" of the present invention.

The converter 413 irreversibly converts the data decoded by the decoding unit 412 in accordance with the Hash function. The Hash function is an irreversible one-way function to output data of a fixed length from the inputting. Therefore, it is impossible to restore the original data from the converted data. The output unit 414 outputs the data irreversibly converted by the converter 413 to the comparing unit 403.

The storage unit 402 is, for example, a flash memory, and stores the data irreversibly converted in accordance with the Hash function from the magnetic data of the magnetic card 460. The comparing unit 403 includes a CPU, a ROM, a RAM, and the like, and compares the data output from the output unit 414 and the data stored in the storage unit 402. The comparing unit 403 outputs a comparison result to the gate control unit 452 through the communication unit 404.

The gate control unit 452 controls the open/close state of the key of the gate 451 based on the comparison result input from the communication unit 404. Specifically, the gate control unit 452 switches the open/close state of the key of the gate 451 when receiving a comparison result indicating that the data output from the output unit 414 is matched with the data stored in the storage unit 402. On the other hand, the gate control unit 452 maintains the open/close state of the key of the gate 451 when receiving a comparison result indicating that the data output from the output unit 414 is not matched with the data stored in the storage unit 402.

In the sixth embodiment, as described above, the converter 413 for irreversibly converting magnetic data read by the reading unit 411 and the output unit 414 for outputting data irreversibly converted by the converter 413 are employed. Consequently, even if the converted data is illegally acquired through the lead wire from the output unit 414 by directly connecting the lead wire to the output line of the magnetic head 410, the magnetic information can be prevented from being illegally acquired since the magnetic information (the content of the magnetic data) cannot be restored from the converted data. As a result, in the card processing apparatus 400 according to the sixth embodiment, the magnetic card 460 can be authenticated while preventing the magnetic information from being illegally acquired.

Furthermore, in the sixth embodiment, the data that cannot be restored can be easily created from the magnetic data read by the reading unit 411 by irreversibly converting the decoded data in accordance with the Hash function.

The present invention may adopt various embodiments other than those described above. For example, in the first embodiment, there is shown the example of employing the timer 72 for measuring a time length from the start of reading the magnetic data by the reading unit 71 and the output control unit 73 for controlling whether or not to output a reproduction signal based on the time length measured by the timer 72. However, the present invention is not limited to such a case. Alternatively, a counter for counting the number of pulses of a reproduction signal of the reading unit 71 may be employed in place of the timer 72, and the output control unit may control whether or not to output the reproduction signal based on the number of counts obtained by the counter. Further alternatively, both the timer 72 and the counter for counting the number of pulses may be employed, and the output control unit may stop the output of the reproduction signal when either one of the conditions, the time length measured by the timer 72 or the number of counts obtained by the counter, is satisfied.

In the second embodiment, the switch element 206 is shown as one example of the switching portion of the present invention. However, the present invention is not limited to such a case. Alternatively, the switching portion of the present invention may be configured by a logic circuit.

The second embodiment shows the example in which the control signal is switched to L level after the magnetic card 160 is inserted until being ejected. However, the present invention is not limited to such a case. Alternatively, the control signal may be returned to H level in the state where the magnetic card 160 is taken inside the housing 1 when the magnetic card 160 passes through the slot 1a after the magnetic card 160 is inserted. In other words, the control unit 202 may set the control signal to L level only for a predetermined time length when the reproduction signal for the preamble part of the magnetic data is input thereto from the card insertion detecting unit 201.

In the first embodiment, the conversion portion for irreversibly converting a reproduction signal to be output from the output unit 74 may be arranged in the card insertion detecting unit 7. This is the same in the second and third embodiments.

The first embodiment shows the example in which the reading unit 71 includes the core 71b and the coil 71c. However, the present invention is not limited to such a case. Alternatively, the reading unit may include another magnetic sensor such as a magnetic resistance element. This is the same in the second and third embodiments.

The fourth embodiment shows the example of performing the irreversible conversion by extracting predetermined data from the decoded data. However, the present invention is not limited to such a case. Alternatively, the decoded data may be irreversibly converted in accordance with the Hash function. Further, the sixth embodiment shows the example of irreversibly converting the decoded data in accordance with the Hash function. However, the present invention is not limited to such a case. Alternatively, the irreversible conversion may be performed by extracting predetermined data from the decoded data.

The fourth embodiment shows the example of employing the converter 76 for performing the irreversible conversion by extracting predetermined data. However, the present invention is not limited to such a case. Alternatively, without employing the converter 76, a predetermined signal indicating that the magnetic card 160 is inserted may be output from the output unit 77 when the magnetic data is read by the reading unit 71.

The fifth embodiment shows the example of arranging the magnetic head 209 and the reading unit 201a so as to incline with respect to the recording direction of magnetic data. However, the present invention is not limited to such a case. Alternatively, as in a variant of the fifth embodiment shown in Fig. 40, a reading unit 501 having a gap 500 formed so as to incline with respect to the recording direction of magnetic data may be provided in a magnetic head 502 that is arranged to be orthogonal to the recording direction of the magnetic data.

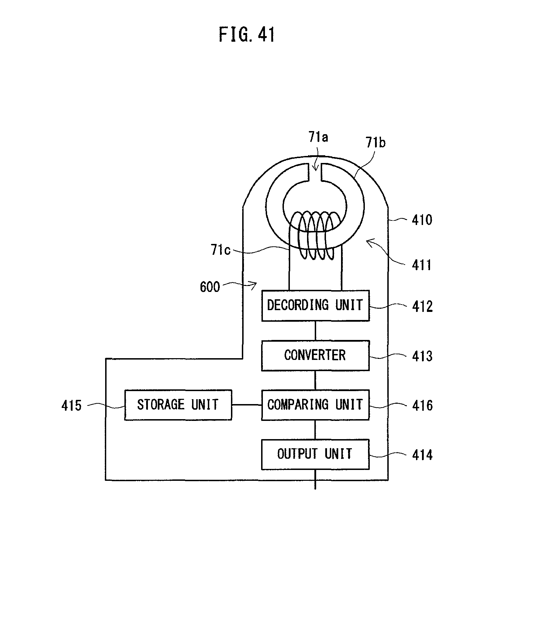

The sixth embodiment describes the magnetic data reading unit 401 including the reading unit 411, the decoding unit 412, the converter 413, and the output unit 414. However, the present invention is not limited to such a case. Alternatively, as in a magnetic data reading unit 600 according to a variant of the sixth embodiment shown in Fig. 41, a storage unit 415 and a comparing unit 416 may be further employed. The configurations of the storage unit 415 and the comparing unit 416 are similar to those of the storage unit 402 and the comparing unit 403 of Fig. 38 respectively. The output unit 414 outputs a comparison result provided by the comparing unit 416. According to such a configuration, the confidentiality of the magnetic data reading unit 600 can be further enhanced.

The sixth embodiment shows the example in which the configuration of the reading unit 411 is similar to the configuration of the reading unit 71 of the fourth embodiment (Fig. 26). However, the present invention is not limited to such a case. Alternatively, the configuration of the reading unit 411 may be similar to the configuration of the reading unit 201a of the fifth embodiment (Fig. 35). In this case, the decoding unit 412 and the converter 413 may be omitted, and a reproduction signal that is impossible to be restored to the magnetic information may be stored in the storage unit 402.

The fourth embodiment shows the example in which three tracks are provided in the magnetic stripe 161. However, the present invention is not limited to such a case. Alternatively, the number of tracks provided in the magnetic stripe 161 may be two or less, or four or more.

The fourth embodiment shows the example in which the reading unit 71 includes the core 71b and the coil 71c. However, the present invention is not limited to such a case. Alternatively, the reading unit may include another magnetic sensor such as a magnetic resistance element. This is the same in the fifth and sixth embodiments.

The fifth embodiment shows the example in which the reading unit 201a reads the magnetic data of one track 161a of the magnetic stripe 161. However, the present invention is not limited to such a case. Alternatively, the reading unit 201a may simultaneously read the magnetic data of three tracks 161a of the magnetic stripe 161.

In the sixth embodiment, the irreversibly converted data stored in the storage unit 402 may be provided from the gate control unit 452 through the communication unit 404.

It should also be understood that although the foregoing description has been made on preferred embodiments, the invention is not limited thereto and various changes and modifications, for example, by combining features of the above-described embodiments, may be made without departing from the spirit of the invention and the scope of the appended claims.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Reference Signs List

- 1a: slot
- 5: shutter member
- 7, 201, 301: card insertion detecting unit (data reading device)
- 71, 204, 201a, 304, 411, 501: reading unit
- 72: timer (measuring portion)
- 73: output control unit (switching portion)
- 76, 413: converter (conversion portion)
- 74, 77, 201b, 207, 307, 414: output unit
- 11, 202: control unit
- 100, 200, 300, 400: card processing apparatus
- 160, 460: magnetic card
- 205, 305: input unit
- 206, 306: switch element (switching portion)
- 401, 600: magnetic data reading unit (data reading device)
- 6, 302: shutter position detecting unit
- 402, 415: storage unit
- 403, 416: comparing unit

## Claims

1. A card processing apparatus (100) comprising a magnetic data reading device (7) provided with a reading unit (71) for reading magnetic data recorded on a magnetic card (160) and an output unit (74) for outputting a signal read by the reading unit (71),
**characterized in that** the magnetic data reading device (7) further comprises a switching portion (73) for switching whether or not to output the signal read by the reading unit (71) from the output unit (74).

2. A card processing apparatus according to claim 1,
wherein the magnetic data reading device (7) further comprises a measuring portion (72) for measuring a time length from the start of reading the magnetic data by the reading unit (71), and
the switching portion (73) switches so as not to output a signal from the output unit (74) when the time length measured by the measuring portion (72) elapses a predetermined time length.

3. A card processing apparatus according to claim 1 or 2,
wherein the magnetic data reading device (201) further comprises an input unit (205) to which a control signal is input, and
the switching portion (206) switches whether or not to output the signal read by the reading unit (204) from the output unit (207) based on the control signal input to the input unit (205).

4. A card processing apparatus according to claim 3, further comprising:
a slot (1a) to which a magnetic card is inserted;
a shutter member (5) for opening and closing the slot (1a); and
a control unit (202) for controlling the movement of the shutter member (5);
wherein the magnetic data reading device (201) is arranged at the slot (1a), and
the control unit (202) outputs a control signal to be input to the input unit (205).

5. A card processing apparatus according to claim 4,
wherein the reading unit (204) reads the magnetic data recorded on the magnetic card (160) when the magnetic card (160) is inserted to the slot (1a),
the output unit (207) outputs the signal read by the reading unit (204) to the control unit (202), and
the control unit (202) moves the shutter member (5) so as to open the slot (1a) and outputs the control signal for controlling the switching portion (206) so as to stop the signal output from the output unit (207) when the signal is input thereto from the output unit (207).

6. A card processing apparatus according to at least one of claims 3 to 5, further comprising:
a slot (1a) to which the magnetic card (160) is inserted;
a shutter member (5) for opening and closing the slot (1a); and
a shutter position detecting unit (302) for detecting the position of the shutter member (5);
wherein the magnetic data reading device (301) is arranged at the slot (1a), and
the shutter position detecting unit (302) outputs a control signal that changes according to the position of the shutter member (5) to the input unit (305).
